# EUROPÄISCHE PATENTANMELDUNG

(11) **EP 3 312 781 A1**
(43) Veröffentlichungstag der Anmeldung: **25.04.2018**
(21) Anmeldenummer: 16194338.6
(22) Anmeldetag: 18.10.2016
(51) Int. Cl.: G06Q 10/04

(54) **AUTOMATISCHE OPTIMIERUNG VON TEILEPROGRAMMEN**

(71) Anmelder: Siemens Aktiengesellschaft, 80333 München (DE)
(72) Erfinder: Bitterolf, David, 91056 Erlangen (DE); Hamm, Carsten, 91330 Eggolsheim (DE); Reichel, Theo, 91301 Forchheim (DE)

(57) **Zusammenfassung**

Ein Teileprogramm (1) einer Bewegungssteuerung (3) enthält eine Vielzahl von einzelnen Befehlen (2). Eine Überprüfungseinrichtung (4) unterzieht die Befehle (2) des Teileprogramms (1) einer Optimierungsprüfung. Die Optimierungsprüfung erfolgt unabhängig von einer Überprüfung der einzelnen Befehle (2) und der Befehle (2) in ihrer Gesamtheit auf syntaktische Korrektheit. Die Überprüfungseinrichtung (4) gibt im Rahmen der Optimierungsprüfung aufgefundene Möglichkeiten zur Optimierung aus und/oder optimiert das Teileprogramm (1) aufgrund der aufgefundenen Möglichkeiten zur Optimierung automatisch.

## Beschreibung

Die vorliegende Erfindung geht aus von einem Überprüfungsverfahren für ein eine Vielzahl von einzelnen Befehlen enthaltendes Teileprogramm einer Bewegungssteuerung.

Teileprogramme werden in der Regel gar nicht oder lediglich intellektuell, d.h. von einem Menschen, geprüft. Im Falle der Überprüfung wird das jeweilige Teileprogramm zusammen mit den zugehörigen Parametern dem prüfenden Menschen zur Verfügung gestellt und von diesem durchgearbeitet. Derartige Überarbeitungen Überprüfungen sind umständlich und fehlerträchtig und weiterhin oftmals auch nicht vollständig.

Die Aufgabe der vorliegenden Erfindung besteht darin, Möglichkeiten zu schaffen, mittels derer auf einfache und zuverlässige Weise eine umfassende Überprüfung eines Teileprogramms möglich wird.

Die Aufgabe wird durch ein Überprüfungsverfahren mit den Merkmalen des Anspruchs 1 gelöst. Vorteilhafte Ausgestaltungen des Überprüfungsverfahrens sind Gegenstand der abhängigen Ansprüche 2 bis 6.

Erfindungsgemäß wird ein Überprüfungsverfahren für ein eine Vielzahl von einzelnen Befehlen enthaltendes Teileprogramm einer Bewegungssteuerung geschaffen,
- wobei eine Überprüfungseinrichtung die Befehle des Teileprogramms unabhängig von einer Überprüfung auf syntaktische Korrektheit der einzelnen Befehle und der Befehle in ihrer Gesamtheit einer Optimierungsprüfung unterzieht,
- wobei die Überprüfungseinrichtung im Rahmen der Optimierungsprüfung aufgefundene Möglichkeiten zur Optimierung ausgibt und/oder das Teileprogramm aufgrund der aufgefundenen Möglichkeiten zur Optimierung automatisch optimiert.

Dadurch werden die Überprüfungen automatisiert und damit vollständig und fehlerfrei.

Im Rahmen des Überprüfungsverfahrens geht es nicht um eine Überprüfung der einzelnen Befehle und der Befehle in ihrer Gesamtheit auf syntaktische Korrektheit. Diesbezüglich ist es alternativ möglich, dass diese im Rahmen des Überprüfungsverfahrens zusätzlich durchgeführt wird oder eine syntaktische Korrektheit bereits vorausgesetzt wird. Es geht vielmehr um eine Optimierung eines an sich korrekten, von der Bewegungssteuerung ausführbaren Teileprogramms, dessen Ausführung durch die Bewegungssteuerung zumindest vom Ansatz her auch die gewünschte Bearbeitung bewirkt.

Im Rahmen der Optimierungsprüfung kann die Überprüfungseinrichtung verschiedene Maßnahmen ergreifen.

So ist es beispielsweise möglich, dass die Überprüfungseinrichtung prüft, ob das Teileprogramm redundante Befehle enthält. Immer dann, wenn dies der Fall ist, gibt die Überprüfungseinrichtung diesen Sachverhalt aus und/oder entfernt den jeweiligen redundanten Befehl aus dem Teileprogramm.

Alternativ oder zusätzlich ist es möglich, dass die Überprüfungseinrichtung anhand einer Konkordanzliste prüft, ob für einen jeweiligen im Teileprogramm verwendeten Befehl ein modifizierter Befehl verfügbar ist. Immer dann, wenn dies der Fall ist, gibt die Überprüfungseinrichtung diesen Sachverhalt aus und/oder ersetzt den jeweiligen verwendeten Befehl durch den modifizierten Befehl.

Alternativ oder zusätzlich ist es möglich, dass die Überprüfungseinrichtung für Befehle, für deren korrekte Ausführung durch die Bewegungssteuerung von dem jeweiligen Befehl verwendete Parameter bestimmte Werte aufweisen müssen, die entsprechenden Parameter ermittelt. Immer dann, wenn die Parameter nicht die bestimmten Werte aufweisen, gibt die Überprüfungseinrichtung diesen Sachverhalt aus und/oder setzt die Parameter auf die bestimmten Werte. Letzteres ist in manchen Fällen nur dann möglich, wenn der zu setzende Wert binär ist. In Einzelfällen kann ein derartiges Setzen auch dann möglich sein, wenn der zu setzende Wert mehr als zwei Werte annehmen kann. Beispielsweise kann in diesem Fall der Wert - je nach Sachverhalt - auf ein sinnvolles Minimum oder Maximum gesetzt werden.

Alternativ oder zusätzlich ist es möglich, dass die Überprüfungseinrichtung für mindestens eine Gruppe möglicher Befehle prüft, ob das Teileprogramm mindestens einen der möglichen Befehle enthält. Immer dann, wenn dieser Sachverhalt nicht gegeben ist, weist die Überprüfungseinrichtung auf diesen Sachverhalt hin.

Alternativ oder zusätzlich ist es möglich, dass die Überprüfungseinrichtung
- eine Anzahl von Sequenzen ermittelt, wobei die Sequenzen jeweils eine Anzahl von unmittelbar aufeinanderfolgenden parametrierbaren Befehlen eines vorbestimmten Typs aufweisen, die Sequenzen jeweils durch mindestens einen Befehl eines von dem vorbestimmten Typ verschiedenen Typs voneinander getrennt sind und die Anzahl an unmittelbar aufeinanderfolgenden parametrierbaren Befehlen der jeweiligen Sequenz unterhalb eines ersten Grenzwerts liegt,
- prüft, ob die ermittelte Anzahl an Sequenzen oberhalb eines zweiten Grenzwerts liegt, und
- immer dann, wenn dieser Sachverhalt gegeben ist, auf diesen Sachverhalt hinweist und/oder die parametrierbaren Befehle des vorbestimmten Typs der Sequenzen jeweils durch zulässige Befehle ersetzt, deren Ausführung durch die Bewegungssteuerung die gleiche Wirkung hat wie die Ausführung der parametrierbaren Befehle des vorbestimmten Typs der jeweiligen Sequenz.

Die Aufgabe wird weiterhin durch ein Computerprogramm gelöst, das Maschinencode umfasst, der von einer Überprüfungseinrichtung abarbeitbar ist, wobei die Abarbeitung des Maschinencodes durch die Überprüfungseinrichtung bewirkt, dass die Überprüfungseinrichtung ein derartiges Überprüfungsverfahren ausführt.

Die Aufgabe wird weiterhin durch eine Überprüfungseinrichtung gelöst, wobei die Überprüfungseinrichtung mit einem derartigen Computerprogramm programmiert ist, so dass die Überprüfungseinrichtung im Betrieb ein derartiges Überprüfungsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Teileprogramm, eine Bewegungssteuerung und eine Überprüfungseinrichtung,
- FIG 2: ein Ablaufdiagramm und
- FIG 3 bis 7: je einen Auszug aus dem Teileprogramm und den korrespondierenden Auszug eines modifizierten Teileprogramms.

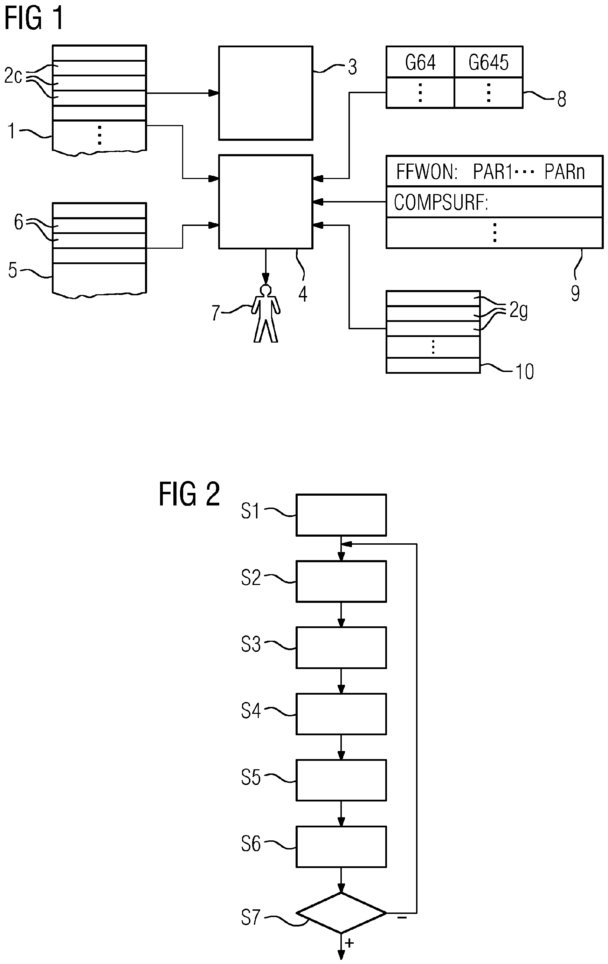

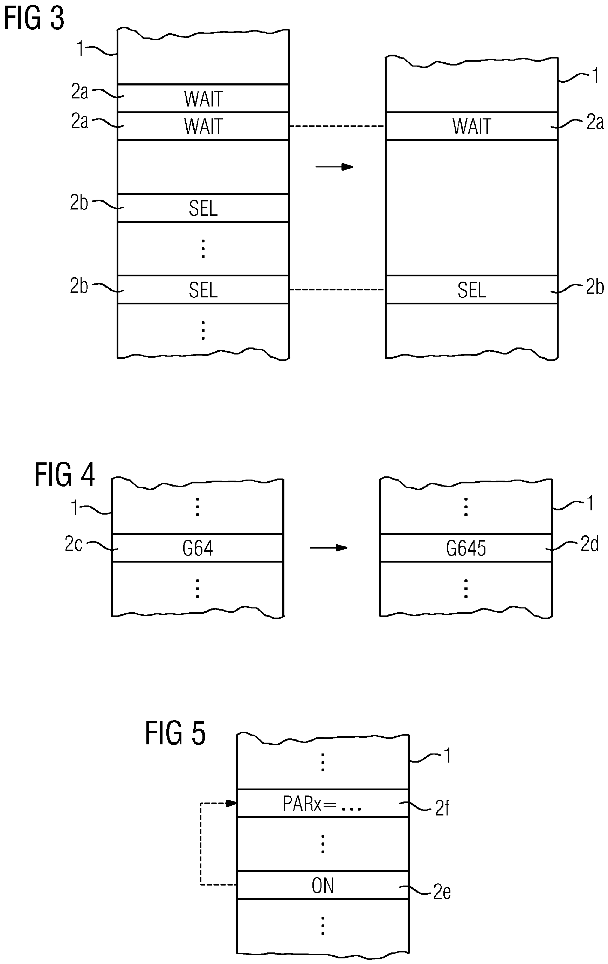

Ein Teileprogramm 1 enthält gemäß FIG 1 eine Vielzahl von Befehlen 2. Die Anzahl an Befehlen 2 liegt in vielen Fällen weit über 10.000. In FIG 1 sind nur einige der Befehle 2 mit ihrem jeweiligen Bezugszeichen versehen. Weiterhin ist in den FIG 3 bis 8 bei einigen der Befehle 2 das jeweilige Bezugszeichen durch einen kleinen Buchstaben ergänzt, damit im Einzelfall auf ganz bestimmte der Befehle 2 Bezug genommen werden kann. Die um kleine Buchstaben ergänzten Befehle werden nachstehend auch durch einen Zusatz im Namen ergänzt.

Das Teileprogramm 1 kann von einer Bewegungssteuerung 3 ausgeführt werden. Die Bewegungssteuerung 3 kann im Einzelfall als sogenannte MC = Motion Control ausgebildet sein. Im Regelfall handelt es sich bei der Bewegungssteuerung 3 jedoch um eine numerische Steuerung (CNC = Computer Numerical Control). Die Ausführungen des Teileprogramms 1 durch die Bewegungssteuerung 3 bewirkt, dass die Bewegungssteuerung 3 eine Werkzeugmaschine oder eine andere Produktionsmaschine (beispielsweise einen Roboter) ansteuert, so dass die Maschine ein Teil bearbeitet.

Zur Überprüfung des Teileprogramms 1 ist eine Überprüfungseinrichtung 4 vorhanden. Die Überprüfungseinrichtung 4 ist mit einem Computerprogramm 5 programmiert. Das Computerprogramm 5 umfasst Maschinencode 6, der von der Überprüfungseinrichtung 4 abarbeitbar ist. Die Abarbeitung des Maschinencodes 6 durch die Überprüfungseinrichtung 4 bewirkt, dass die Überprüfungseinrichtung 4 im Betrieb ein Überprüfungsverfahren ausführt, das nachstehend in Verbindung mit den weiteren FIG näher erläutert wird.

Gemäß FIG 2 nimmt die Überprüfungseinrichtung 4 in einem Schritt S1 das Teileprogramm 1 entgegen. In einem Schritt S2 selektiert die Überprüfungseinrichtung 4 einen der Befehle 2 des Teileprogramms 1. In einem Schritt S3 führt die Überprüfungseinrichtung 4 eine Überprüfung des selektierten Befehls 2 als solchen durch, also unabhängig von anderen Befehlen 2. In einem Schritt S4 führt die Überprüfungseinrichtung 4 eine vom Ergebnis der Überprüfung des Schrittes S3 abhängige Reaktion aus. In einem Schritt S5 führt die Überprüfungseinrichtung 4 eine Überprüfung des selektierten Befehls 2 unter Berücksichtigung der weiteren Befehle 2 des Teileprogramms 1 durch. In einem Schritt S6 führt die Überprüfungseinrichtung 4 eine vom Ergebnis der Überprüfung des Schrittes S5 abhängige Reaktion aus. In einem Schritt S7 prüft die Überprüfungseinrichtung 4, ob sie die Schritte S3 bis S6 bereits für alle Befehle 2 des Teileprogramms 1 ausgeführt hat. Wenn dies nicht der Fall ist, geht die Überprüfungseinrichtung 4 zum Schritt S2 zurück. Bei der erneuten Ausführung des Schrittes S2 selektiert die Überprüfungseinrichtung 4 einen anderen Befehl 2 des Teileprogramms 1, für den sie die Schritte S3 bis S6 noch nicht ausgeführt hat. Anderenfalls ist die Vorgehensweise von FIG 2 beendet.

Die Vorgehensweise gemäß FIG 2 bewirkt im Ergebnis, dass die Überprüfungseinrichtung 4 die Befehle 2 des Teileprogramms 1 einer Optimierungsprüfung unterzieht. Diese Prüfung erfolgt unabhängig davon, ob die Befehle 2 einzeln oder in ihrer Gesamtheit syntaktisch korrekt sind. Falls eine syntaktische Überprüfung erfolgt, erfolgt diese zusätzlich zur Vorgehensweise von FIG 2. Falls die Überprüfungseinrichtung 4 im Rahmen der Optimierungsprüfung Möglichkeiten zur Optimierung auffindet, gibt sie weiterhin im Rahmen der Schritte S4 und S6 diese Möglichkeiten aus, beispielsweise an einen Anwender 7. Alternativ oder zusätzlich ist es möglich, dass die Überprüfungseinrichtung 4 das Teileprogramm 1 aufgrund der aufgefundenen Möglichkeiten zur Optimierung automatisch optimiert. Die Implementierung der Optimierung wird anhand der nachstehenden Erläuterung von Beispielen deutlicher werden.

Beispielsweise ist es entsprechend der Darstellung in FIG 3 möglich, dass die Befehle 2 des Teileprogramms 1 mehrmals hintereinander Wartebefehle 2a aufweist, ohne dass zwischen den aufeinanderfolgenden Wartebefehlen 2a Tätigkeiten erfolgen. In diesem Fall ist - wenn überhaupt - nur einer der Wartebefehle 2a erforderlich. Die anderen Wartebefehle 2a sind redundant. Es ist daher entsprechend der Darstellung in FIG 3 möglich, die anderen Wartebefehle 2a aus dem Teileprogramm 1 zu entfernen. Es ist möglich, dass die Überprüfungseinrichtung 4 diese Überprüfung - also das Vorhandensein aufeinanderfolgender Wartebefehle 2a - im Schritt S5 durchführt und die zugehörige Maßnahme - also das Entfernen der redundanten Wartebefehle 2a - im Rahmen des Schrittes S6 selbst ausführt. Der übernommene Wartebefehl 2a ist in FIG 3 durch die gestrichelte Linie erkennbar. Hierbei muss nicht zwangsweise der letzte Wartebefehl 2a übernommen werden. Es könnte alternativ auch ein anderer der Wartebefehle 2a übernommen werden. Alternativ ist es möglich, dass die Überprüfungseinrichtung 4 im Rahmen des Schrittes S5 die Überprüfung durchführt und im Rahmen des Schrittes S6 einen entsprechenden Hinweis auf die redundanten Wartebefehle 2a ausgibt. In diesem Fall kann der Anwender 7 selbst entscheiden, ob und gegebenenfalls welche der Wartebefehle 2a er entfernt und welche er beibehält.

Aufeinanderfolgende Wartebefehle 2a sind nur ein Beispiel von redundanten Befehlen. Es sind auch andere Fallgestaltungen möglich, in denen Befehle 2 redundant sind. Ein Beispiel ist ein Auswahlbefehl 2b beispielsweise für ein Werkzeug oder für eine bestimmte Schneidkante eines Werkzeugs, wenn der Auswahlbefehl 2b durch einen weiteren Auswahlbefehl 2b obsolet wird, ohne dass das ausgewählte Element zwischen den beiden genannten Auswahlbefehlen 2b benutzt wird. Ob das ausgewählte Element zwischen den beiden Auswahlbefehlen 2b benutzt wird, kann die Überprüfungseinrichtung 4 anhand der Befehle 2 des Teileprogramms 1 zwischen den beiden Auswahlbefehlen 2b ermitteln. Der übernommene Auswahlbefehl 2b ist in FIG 3 durch die gestrichelte Linie erkennbar. Diese Auswahl muss getroffen werden, wenn die beiden Auswahlbefehle 2b verschiedene Wirkungen aufweisen, beispielsweise dass zunächst ein erstes und sodann ein zweites Werkzeug angewählt wird. Wenn hingegen die beiden Auswahlbefehle 2b gleichartig sind, also beispielsweise jeweils dasselbe Werkzeug angewählt wird, kann nach Bedarf der eine oder der andere Auswahlbefehl 2b übernommen werden. In der Regel ist es in diesem Fall von Vorteil, den frühesten derartigen Auswahlbefehl 2b zu übernehmen. Ein weiteres Beispiel ist die Definition von Variablen, die im weiteren Verlauf des Teileprogramms 1 weder belegt noch verwertet werden. Ein weiteres Beispiel ist die Belegung von Variablen, die im weiteren Verlauf des Teileprogramms 1 nicht verwertet werden. Auch andere Gestaltungen sind denkbar und möglich.

Weiterhin ist es möglich, dass der Überprüfungseinrichtung 4 entsprechend der Darstellung in FIG 1 eine Konkordanzliste 8 zur Verfügung steht, anhand derer die Überprüfungseinrichtung 4 prüfen kann, ob für - prinzipiell zulässige - verwendete Befehle 2c modifizierte Befehle 2d ermittelt werden können.

Die modifizierten Befehle 2d bewirken in diesem Fall dieselbe tatsächliche Bearbeitung wie die Befehle 2c, sind jedoch aus technologischen Gründen günstiger und/moderner als der entsprechende verwendete Befehl 2c. In diesem Fall kann die Überprüfungseinrichtung 4 den verwendeten Befehl 2c im Schritt S3 überprüfen und entsprechend der Darstellung in FIG 4 gegebenenfalls im Schritt S4 den jeweiligen verwendeten Befehl 2c durch den korrespondierenden modifizierten Befehl 2d ersetzen. Alternativ ist es möglich, dass die Überprüfungseinrichtung 4 im Rahmen des Schrittes S4 einen entsprechenden Hinweis auf die mögliche Verwendung des modifizierten Befehls 2d als Ersatz für den tatsächlich verwendeten Befehl 2c ausgibt. Beispielsweise existiert für den Befehl 2 mit der Bezeichnung G64 auch der modifizierte, modernere Befehl G645. Sowohl der Befehl G64 als auch der Befehl G645 bewirken eine Eckenverrundung der programmierten Bahn. Der Befehl G645 ist dem Befehl G64 jedoch überlegen, weil er geometrisch definiert ist und bis zur zweiten Ableitung stetig ist. Es gibt auch weitere Befehlspaare, bei denen eine derartige Vorgehensweise möglich ist.

Für manche Befehle 2 ist es weiterhin erforderlich, dass für ihre korrekte Ausführung durch die Bewegungssteuerung 3 von dem jeweiligen Befehl 2 verwendete Parameter bestimmte Werte aufweisen. Wenn beispielsweise der Befehl 2 ein Aktivierungsbefehl 2e zum Aktivieren einer Vorsteuerung ist (beispielsweise der Fachleuten bekannte Befehl FFWON), ist es für die korrekte Ausführung des Aktivierungsbefehls 2e durch die Bewegungssteuerung 3 erforderlich, dass zuvor in (mindestens) einem Parametrierungsbefehl 2f Achsenträgheiten von durch den Aktivierungsbefehl 2e beeinflussten angesteuerten Achsen zuvor auf sinnvolle Werte gesetzt wurden. In diesem Fall ist es daher möglich, dass die Überprüfungseinrichtung 4 im Schritt S5 für einen Aktivierungsbefehl 2e prüft, ob entsprechend der Darstellung in FIG 5 vor dem Aktivierungsbefehl 2e der entsprechende Parametrierungsbefehl 2f vorhanden ist und ob die dadurch festgesetzten Werte für die Achsenträgheiten innerhalb des für die jeweilige Achse jeweils zulässigen Wertebereichs liegen. Wenn dies nicht der Fall ist, kann die Überprüfungseinrichtung 4 im Schritt S6 eine entsprechende Meldung an den Anwender 7 ausgeben.

Aktivierungsbefehle 2e sind nur ein Beispiel von derartigen Befehlen. Es sind auch andere Fallgestaltungen möglich. Ein Beispiel ist der Befehl COMPCURF, der einen beschleunigungsstetigen Übergang zwischen aufeinanderfolgenden Bewegungsbefehlen des Teileprogramms 1 bewirkt. In diesem Fall muss zuvor in einem Parametrierungsbefehl 2f CP (= continuous path) aktiv geschaltet worden sein, nicht PTP (= point to point). In analoger Weise müssen im Falle einer Aktivierung einer ruckbegrenzten Ansteuerung der Achsen ("SOFT") zuvor in einem Parametrierungsbefehl 2f Werte für den maximalen Ruck der Achsen auf sinnvolle Werte gesetzt werden. Auch andere Gestaltungen sind denkbar und möglich.

Welche Parameter für welche Aktivierungsbefehle 2e im einzelnen benötigt werden und welche Werte diese aufweisen dürfen oder müssen, kann der Überprüfungseinrichtung 4 beispielsweise durch eine entsprechende Liste 9 zulässiger Werte bekannt sein.

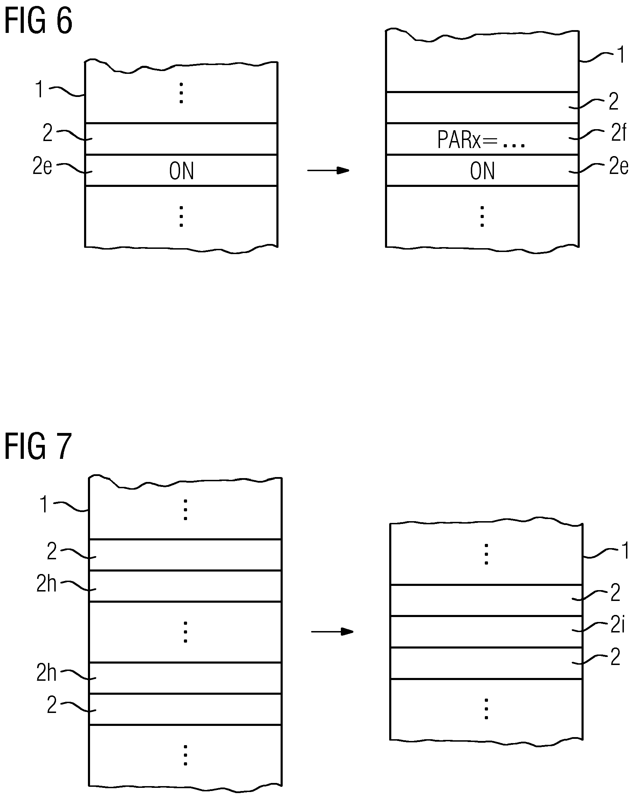

In vielen Fällen wird es nicht möglich sein, dass die Überprüfungseinrichtung 4 einen fehlenden Parametrierungsbefehl 2f eigenständig in das Teileprogramm 1 einfügt. In manchen Fällen ist dies jedoch möglich. Beispielsweise ist dies möglich, wenn der Parametrierungsbefehl 2f einen Parameter prinzipiell stets auf einen von zwei Werten setzt und für den konkreten Aktivierungsbefehl 2e nur einer der beiden Werte sinnvoll ist. Weiterhin kann es im Falle eines vorbekannten Wertebereichs für den jeweiligen Parameter möglich sein, den Parameter - je nach Art des Parameters - auf seinen Minimalwert oder seinen Maximalwert zu setzen. In derartigen Fällen ist es möglich, dass im Falle des Fehlens des Parametrierungsbefehls 2f die Überprüfungseinrichtung 4 entsprechend der Darstellung in FIG 6 im Schritt S6 den Parametrierungsbefehl 2f in das Teileprogramm 1 einfügt.

Eine weitere Möglichkeit zur Optimierung besteht darin, dass die Überprüfungseinrichtung 4 im Schritt S5 für mindestens eine Gruppe möglicher Befehle 2g prüft, ob das Teileprogramm 1 mindestens einen der möglichen Befehle 2b enthält. In diesem Fall kann die Überprüfungseinrichtung 4 im Schritt S6 darauf hinweisen, wenn das Teileprogramm 1 keinen der möglichen Befehle 2g enthält. Die möglichen Befehle 2g können der Überprüfungseinrichtung 4 beispielsweise aufgrund einer Befehlsliste 10 bekannt sein.

Bei den möglichen Befehlen 2g kann es sich insbesondere um die Befehle eines einen Basisbefehlssatz ergänzenden Zusatzbefehlssatzes handeln, für den jedoch extra gezahlt werden muss. Beispielsweise ist in vielen Fällen ein zusätzliches Optionspaket (dies ist der Zusatzbefehlssatz bzw. enthält den Zusatzbefehlssatz) erforderlich, wenn Splines programmierbar sein sollen. Wenn aufgrund der Verfügbarkeit des Optionspakets - für das gezahlt wurde - Splines möglich sind, aber nicht verwendet werden, so ist entweder das Teileprogramm 1 suboptimal programmiert oder es wurde unnütz Geld ausgegeben. Beide Fälle sind nach Möglichkeit zu vermeiden.

Die soeben beschriebene Vorgehensweise betrifft den Fall, dass die möglichen Befehle 2g des Zusatzbefehlssatzes zur Verfügung stehen und die Überprüfungseinrichtung 4 prüft, ob die möglichen Befehle 2g (zumindest teilweise) verwendet werden. Es ist auch die umgekehrte Ausgestaltung möglich, in der geprüft wird, ob eine Verwendung von zulässigen Befehlen des Zusatzbefehlssatzes (oder eines anderen Zusatzbefehlssatzes) sinnvoll ist.

In diesem Fall ermittelt die Überprüfungseinrichtung 4 im Schritt S5 zunächst Sequenzen von unmittelbar aufeinanderfolgenden Befehlen 2h eines vorbestimmten Typs. Die Befehle 2h sind parametrierbar. Insbesondere kann es sich um sogenannte Linearsätze handeln. Ein Linearsatz ist ein Befehl, mittels dessen bei Ausführung durch die Bewegungssteuerung 3 direkt eine bestimmte Positionierung eines Werkzeugs relativ zu einem Werkstück eingestellt wird. Der Linearsatz kann zusätzlich auch eine Orientierung des Werkzeugs relativ zum Werkstück definieren.

Sodann ermittelt die Überprüfungseinrichtung 4 die Länge der jeweiligen Sequenz. Die Länge ist durch die beiden die jeweilige Sequenz begrenzenden Befehle 2 definiert. Diese beiden Befehle 2 weisen einen anderen Typ auf als der Typ der Befehle 2g. Die Sequenzen sind somit entsprechend der Darstellung in FIG 7 jeweils durch mindestens einen Befehl 2 eines von dem vorbestimmten Typ verschiedenen Typs voneinander getrennt.

Im weiteren Verlauf verwertet die Überprüfungseinrichtung 4 nur diejenigen Sequenzen, bei denen die Anzahl an Befehlen 2h der jeweiligen Sequenz unterhalb eines ersten Grenzwerts liegt. Insbesondere ermittelt die Überprüfungseinrichtung 4 im Schritt S5 die Anzahl an derartigen Sequenzen, also an hinreichend kurzen Sequenzen von Befehlen 2h des vorbestimmten Typs. Sodann prüft die Überprüfungseinrichtung 4, ob die ermittelte Anzahl an Sequenzen oberhalb eines zweiten Grenzwerts liegt, ob also das Teileprogramm 1 hinreichend viele derartige kurze Sequenzen enthält. Immer dann, wenn dies der Fall ist, weist die Überprüfungseinrichtung 4 im Schritt S6 auf diesen Sachverhalt hin. Beispielsweise kann die Überprüfungseinrichtung 4 den Anwender 7 darauf hinweisen, dass ein Kauf eines entsprechenden Optionspakets sinnvoll sein könnte, mittels dessen diese Sequenzen eleganter und effizienter programmiert und vor allem von der Bewegungssteuerung 3 mit besserer Genauigkeit abgearbeitet werden können. Ein derartiges Optionspaket enthält dann die entsprechenden Befehle, welche eine geeignete Mächtigkeit aufweisen. Beispiele für derartige Optionspakete sind Optionspakete für Advanced surface oder Top surface. Diese Optionspakete sind Fachleuten bekannt.

Falls die entsprechenden Befehle 2i bereits zulässig sind, also beispielsweise das entsprechende Optionspaket bereits gekauft ist, ist es möglich, dass die Überprüfungseinrichtung 4 den Anwender 7 ebenfalls nur darauf hinweist, dass die Verwendung der entsprechenden Befehle möglich ist. In diesem Fall kann es entsprechend der Darstellung in FIG 7 unter Umständen jedoch auch möglich sein, dass die Überprüfungseinrichtung 4 die parametrierbaren Befehle 2h des vorbestimmten Typs der Sequenzen jeweils durch zulässige Befehle 2i (des entsprechenden Optionspakets) ersetzt. Die Ausführung der Befehle 2i hat in diesem Fall die gleiche Wirkung wie die Ausführung der parametrierbaren Befehle 2h des vorbestimmten Typs der jeweiligen Sequenz.

Zusammengefasst betrifft die vorliegende Erfindung somit folgenden Sachverhalt:
Ein Teileprogramm 1 einer Bewegungssteuerung 3 enthält eine Vielzahl von einzelnen Befehlen 2. Eine Überprüfungseinrichtung 4 unterzieht die Befehle 2 des Teileprogramms 1 einer Optimierungsprüfung. Die Optimierungsprüfung erfolgt unabhängig von einer Überprüfung der einzelnen Befehle 2 und der Befehle 2 in ihrer Gesamtheit auf syntaktische Korrektheit. Die Überprüfungseinrichtung 4 gibt im Rahmen der Optimierungsprüfung aufgefundene Möglichkeiten zur Optimierung aus und/oder optimiert das Teileprogramm 1 aufgrund der aufgefundenen Möglichkeiten zur Optimierung automatisch.

Die vorliegende Erfindung weist viele Vorteile auf. Insbesondere ist auf einfache und zuverlässige Weise eine umfassende Prüfung und Optimierung des Teileprogramms 1 möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Überprüfungsverfahren für ein eine Vielzahl von einzelnen Befehlen (2) enthaltendes Teileprogramm (1) einer Bewegungssteuerung (3),
- wobei eine Überprüfungseinrichtung (4) die Befehle (2) des Teileprogramms (1) unabhängig von einer Überprüfung der einzelnen Befehle (2) und der Befehle (2) in ihrer Gesamtheit auf syntaktische Korrektheit einer Optimierungsprüfung unterzieht,
- wobei die Überprüfungseinrichtung (4) im Rahmen der Optimierungsprüfung aufgefundene Möglichkeiten zur Optimierung ausgibt und/oder das Teileprogramm (1) aufgrund der aufgefundenen Möglichkeiten zur Optimierung automatisch optimiert.

2. Überprüfungsverfahren nach Anspruch 1,
**dadurch gekennzeichnet,**
**dass** die Überprüfungseinrichtung (4) im Rahmen der Optimierungsprüfung prüft, ob das Teileprogramm (1) redundante Befehle (2a, 2b) enthält, und immer dann, wenn dies der Fall ist, diesen Sachverhalt ausgibt und/oder den jeweiligen redundanten Befehl (2a, 2b) aus dem Teileprogramm (1) entfernt.

3. Überprüfungsverfahren nach Anspruch 1 oder 2,
**dadurch gekennzeichnet,**
**dass** die Überprüfungseinrichtung (4) im Rahmen der Optimierungsprüfung anhand einer Konkordanzliste (8) prüft, ob für einen jeweiligen im Teileprogramm (1) verwendeten Befehl (2c) ein modifizierter Befehl (2d) verfügbar ist, und immer dann, wenn dies der Fall ist, diesen Sachverhalt ausgibt und/oder den jeweiligen verwendeten Befehl (2c) durch den modifizierten Befehl (2d) ersetzt.

4. Überprüfungsverfahren nach Anspruch 1, 2 oder 3,
**dadurch gekennzeichnet,**
**dass** die Überprüfungseinrichtung (4) im Rahmen der Optimierungsprüfung für Befehle (2e), für deren korrekte Ausführung durch die Bewegungssteuerung (3) von dem jeweiligen Befehl (2e) verwendete Parameter bestimmte Werte aufweisen müssen, die entsprechenden Parameter ermittelt und immer dann, wenn die Parameter nicht die bestimmten Werte aufweisen, dies ausgibt und/oder die Parameter auf die bestimmten Werte setzt.

5. Überprüfungsverfahren nach einem der obigen Ansprüche,
**dadurch gekennzeichnet,**
**dass** die Überprüfungseinrichtung (4) im Rahmen der Optimierungsprüfung für mindestens eine Gruppe möglicher Befehle (2g) prüft, ob das Teileprogramm (1) mindestens einen der möglichen Befehle (2g) enthält, und immer dann, wenn dieser Sachverhalt nicht gegeben ist, auf diesen Sachverhalt hinweist.

6. Überprüfungsverfahren nach einem der obigen Ansprüche,
**dadurch gekennzeichnet,**
**dass** die Überprüfungseinrichtung (4) im Rahmen der Optimierungsprüfung
- eine Anzahl von Sequenzen ermittelt, wobei die Sequenzen jeweils eine Anzahl von unmittelbar aufeinanderfolgenden parametrierbaren Befehlen (2h) eines vorbestimmten Typs aufweisen, die Sequenzen jeweils durch mindestens einen Befehl (2) eines von dem vorbestimmten Typ verschiedenen Typs voneinander getrennt sind und die Anzahl an unmittelbar aufeinanderfolgenden parametrierbaren Befehlen (2h) der jeweiligen Sequenz unterhalb eines ersten Grenzwerts liegt,
- prüft, ob die ermittelte Anzahl an Sequenzen oberhalb eines zweiten Grenzwerts liegt, und
- immer dann, wenn dieser Sachverhalt gegeben ist, auf diesen Sachverhalt hinweist und/oder die parametrierbaren Befehle (2h) des vorbestimmten Typs der Sequenzen jeweils durch zulässige Befehle (2i) ersetzt, deren Ausführung durch die Bewegungssteuerung (3) die gleiche Wirkung hat wie die Ausführung der parametrierbaren Befehle (2h) des vorbestimmten Typs der jeweiligen Sequenz.

7. Computerprogramm, das Maschinencode (6) umfasst, der von einer Überprüfungseinrichtung (4) abarbeitbar ist, wobei die Abarbeitung des Maschinencodes (6) durch die Überprüfungseinrichtung (4) bewirkt, dass die Überprüfungseinrichtung (4) ein Überprüfungsverfahren nach einem der obigen Ansprüche ausführt.

8. Überprüfungseinrichtung, wobei die Überprüfungseinrichtung mit einem Computerprogramm (5) nach Anspruch 7 programmiert ist, so dass die Überprüfungseinrichtung im Betrieb ein Überprüfungsverfahren nach einem der Ansprüche 1 bis 6 ausführt.
